# EUROPEAN PATENT APPLICATION

(11) **EP 1 930 870 A1**
(43) Date of publication of application: **11.06.2008**
(21) Application number: 06810263.1
(22) Date of filing: 19.09.2006
(51) Int. Cl.: G09G 5/00, G02B 27/02, G11B 20/10, G11B 31/00, H04N 5/64, H04N 5/76

(54) **CONTENT DATA REPRODUCTION SYSTEM AND PROGRAM FOR REALIZING THE CONTENT DATA REPRODUCTION SYSTEM**

(30) Priority: 29.09.2005 JP 2005284770; 01.08.2006 JP 2006209480
(71) Applicant: NIKON CORPORATION, Tokyo 100-8331 (JP)
(72) Inventor: KATO, Shigeru, Tokyo 1008331 (JP); OTSUKI, Masaki, Tokyo 1008331 (JP)
(74) Representative: Whitlock, Holly Elizabeth Ann
(86) International application number: PCT/JP2006/318521
(87) International publication number: WO 2007/037147

(57) **Abstract**

A contents data reproduction system including a reproduction apparatus which reproduces contents data including at least one of audio and image and a device which is connected to the reproduction apparatus and outputs contents data reproduced by the reproduction apparatus to a user, in which the reproduction apparatus has an accepting unit which accepts an instruction to the reproduction apparatus by the user, and a processing unit which determines whether or not the device connected to the reproduction apparatus is capable of corresponding to an operation of the contents data reproduction system, the operation being executed according to the instruction from the user accepted by the accepting unit. Therefore, the contents data reproduction system and a program by which matching of the reproduction apparatus and the device connected to the reproduction apparatus is performed flexibly and efficiently can be provided.

## Description

### TECHNICAL FlELD

The present invention relates to a reproduction apparatus which reproduces a desired content via a wearable device such as a head mounted display or the like, a contents data reproduction system including the device, and a program which realizes the contents data reproduction system.

### BACKGROUND ART

Portable media players to which latest electronic technologies are applied are widely gaining popularity due to a reason that low power consumption can be realized, along with reduction in price and size. In media players in recent years, a small storage medium capable of storing image information with a large amount of information and a compression coding technique are combined. Accordingly, it becomes possible to reproduce various contents.
Also, as devices which are connectable to the media players, not only headphones and earphones but head mounted displays (hereinafter referred to as "HMD") such as a near-eye display apparatus and the like are also developed so as to correspond flexibly to needs of users. An HMD is a device which is wearable on a user's head and is capable of projecting a video on a retina from the front of a user's eye. By connecting the HMD to a media player, wearing the HMD on head, and further manipulating a manipulating part of the media player, the user can watch a content including images such as a movie and a music clip. Patent document 1: Japanese Unexamined Patent Application Publication No. Hei 10-133840

### DISCLOSURE OF THE INVENTION

### PROBLEMS TO BE SOL VED BY THE INVENTION

Incidentally, this manipulation is needed to be performed according to a combination of the HMD and a content. However, since the media player has many features and also a large number of contents data in wide variety are stored in advance in the storage medium of the media player, the above-described manipulation becomes complicated and not always performed properly.
An object of the present invention is to provide a contents data reproduction system and a program by which matching of a reproduction apparatus and a device connected to the reproduction apparatus is performed flexibly and efficiently.

### MEANS FOR SOL VING THE PROBLEMS

A contents data reproduction system according to the present invention includes a reproduction apparatus which reproduces contents data including at least one of audio and image and a device which is connected to the reproduction apparatus and outputs contents data reproduced by the reproduction apparatus to a user, in which the reproduction apparatus has an accepting unit which accepts an instruction to the reproduction apparatus by the user, and a processing unit which determines whether or not the device connected to the reproduction apparatus is capable of corresponding to an operation of the contents data reproduction system, the operation being executed according to an instruction from the user accepted by the accepting unit.

Note that preferably the processing unit may control at least one of the reproduction apparatus and the device connected to the reproduction apparatus according to the determination.
Also preferably, the reproduction apparatus may further include a storing unit which stores the contents data including at least one of audio and image, and an outputting unit which outputs the contents data to the device, the accepting unit may accept an instruction from the user to select the contents data outputted by the outputting unit among the contents data stored in the storing unit, and the processing unit may control at least one of the reproduction apparatus and the device connected to the reproduction apparatus according to a type of the contents data selected by the user.

Also preferably, the device may include a displaying part which displays an image, a wearable part which allows the displaying part to be worn on a head of the user, and a movable part which can correspond to a first mode in which the displaying part is positioned in front of an eye of the user and a second mode in which the displaying part is retracted from the front of the eye of the user, and the processing unit may select the first mode or the second mode according to the type of the contents data selected by the user and drive the movable part.

Also preferably, the device may include a displaying part which displays an image, a wearable part which allows the displaying part to be worn on a head of the user, and a movable part which can correspond to a first mode in which the displaying part is positioned in front of an eye of the user and a second mode in which the displaying part is retracted from the front of the eye of the user, and the reproduction apparatus may include an informing part which selects the first mode or the second mode according to the type of the contents data selected by the user and prompts the user to drive the movable part to the selected mode.

Also preferably, the processing unit may control power supply to the displaying part of the device connected to the reproduction apparatus according to the type of the contents data selected by the user.
Also preferably, the processing unit may control power supply to the outputting unit of the reproduction apparatus according to the type of the contents data selected by the user.

Also preferably, the device may include a displaying part which displays an image, and a wearable part which allows the displaying part to be worn on a head of the user, and
the processing unit may control driving or stopping of display of the image by the displaying part according to at least one of an instruction from the user accepted by the accepting unit and a type of a device connected to the reproduction apparatus other than the wearable part.

Also preferably, the reproduction apparatus may further include a storing unit which stores the contents data including at least one of audio and image, and the processing unit may stop display of the image by the displaying part when an instruction from the user to record the contents data including an image in the storing unit is accepted by the accepting unit.
Also preferably, the reproduction, apparatus may further include an outputting unit which outputs a reproduction signal of the contents data to the device, and the processing unit may control driving or stopping of an operation by the outputting unit according to at least one of an instruction from the user accepted by the accepting unit and a type of the device connected to the reproduction apparatus.

Also preferably, the reproduction apparatus may further include a storing unit which stores the contents data including at least one of audio and image, and the processing unit may stop an operation of the outputting unit when an instruction from the user to record the contents data including an image in the storing unit is accepted by the accepting unit.
Also preferably, the reproduction apparatus may further include a storing unit which stores the contents data including at least one of audio and image, the device may include a displaying part which displays an image, and a wearable part which allows the displaying part to be worn on a head of the user, and the processing unit may determine a condition of whether the displaying part is in use or not, and when the displaying part is not in use, the processing unit may control the reproduction apparatus to change to a mode of recording the contents data including an image in the storing unit.

Also preferably, the reproduction apparatus may further include a storing unit which stores the contents data including at least one of audio and image, the device may include an audio outputting part which outputs audio, and a wearable part which allows the audio outputting part to be worn on a head of the user, and the processing unit may determine a condition of whether the audio outputting part is in use or not, and when the audio outputting part is not in use, the processing unit may control the reproduction apparatus to change to a mode of recording the contents data including audio in the storing unit.

Also preferably, the reproduction apparatus may further include a storing unit which stores informing contents data including at least one of audio and image for informing the user, and the outputting unit may reproduce the informing contents data and output the informing contents data to the device connected to the reproduction apparatus when an instruction from the user to select the contents data of a different type is accepted by the accepting unit.

Also preferably, the reproduction apparatus may further include a storing unit which stores the contents data including at least one of audio and image, and an outputting unit which outputs the contents data to the device, and while outputting moving-image contents data or audio contents data as the contents data, when an instruction from the user to stop reproduction of the contents data is accepted by the accepting unit, the outputting unit may store a stop position at a time of accepting the instruction from the user, and when an instruction from the user to reproduce again the same contents data is accepted by the accepting unit, the outputting unit may start reproduction of the contents data by tracing back from the stop position for a predetermined time.

Also preferably, while outputting moving-image contents data as the contents data, when an instruction from the user to stop reproduction of the moving-image contents data is accepted by the accepting unit, the processing unit may store a stop position at a time of accepting the instruction from the user, and when an instruction from the user to reproduce again the same moving-image contents data is accepted by the accepting unit, the processing unit may start reproduction of the moving-image contents data by tracing back from the stop position for a predetermined time according to an elapsed time from a time of accepting the instruction from the user to stop the moving-image contents data to a time of.. accepting the instruction from the user to reproduce again the same moving-image contents data.

Also preferably, the contents data reproduction system may further include an external apparatus which sends contents data to the reproduction apparatus and is capable of communicating with the reproduction apparatus, in which the reproduction apparatus may include a detecting unit which detects a type of the external apparatus, the accepting unit may be capable of inputting an instruction to the external apparatus, and the processing unit may further control the external apparatus together with the device according to the instruction accepted by the accepting unit.

Also, a program according to the present invention causes a general-purpose computer to perform controls of each of the above-described contents data reproduction system.

### EFFECTS OF THE INVENTION

In an apparatus or a system to which the present invention is applied, manipulations are simplified significantly, and convenience for the user is increased.

### BRIEF DESCRIPTION OF THE DRAWINGS

Fig. 1 is a diagram showing an electrical structure of a first embodiment of the present invention;
Fig. 2 is an overall structure view of a contents data reproduction system and a partial cross-sectional view of a storage case 65 which constitutes an HMD 30;
Fig. 3 is a first flowchart in the first embodiment of the present invention;
Fig. 4 is a second flowchart in the first embodiment of the present invention; and
Fig. 5 is a third flowchart in the first embodiment of the present invention.

### BEST MODE FOR CARRYING OUT THE INVENTION

### [First Embodiment]

Hereinafter, an embodiment of the present invention will be explained in detail based on the drawings. First, an electrical structure will be explained.

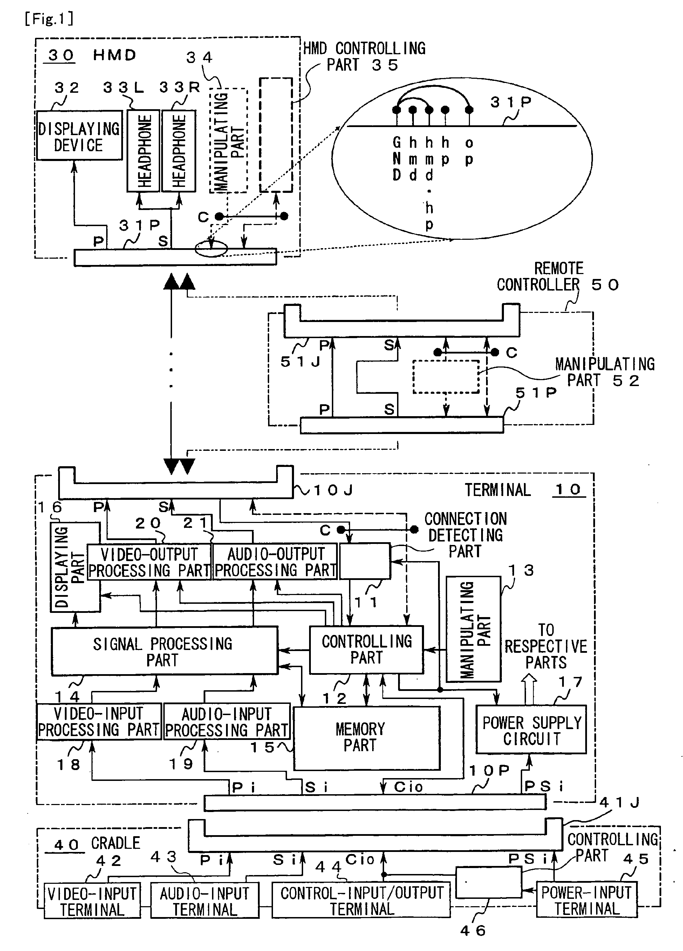

Fig. 1 is a diagram showing an electrical structure of a first embodiment of the present invention. As shown in Fig. 1, the contents data reproduction system is provided with a terminal 10, an HMD 30, a cradle 40, and so on. Among them, the terminal 10 corresponds to the media player which is already explained. Note that although another device may also be used instead of the HMD 30, here the HMD 30 is explained mainly.

The terminal 10 is provided with a receptacle 10J and a plug 10P, the HMD 30 is provided with a plug 31 P, and the cradle 40 is provided with a receptacle 41J. The terminal 10 and the HMD 30 are connected via the receptacle 10J and the plug 31 P. Also, the terminal 10 and the cradle 40 are connected via the plug 10P and the receptacle 41J.
First, an electrical structure and a connection relationship of respective parts of the terminal 10 will be explained.

Pins of the receptacle 10J of the terminal 10 are constituted of P group, S group and C group pins. The P group pins are used for delivery of an image signal outputted to the HMD 30, the S group pins are used for delivery of an audio signal outputted to the HMD 30, and the C group pins are used for delivery of control information outputted by the HMD 30. Note that identifiers "P", "S", "C" of these groups are initials of "Picture", "Sound", "Control", respectively.

Also, the pins of the plug 10P of the terminal 10 are constituted of Pi group, Si group, Cio group, and PSi group pins. The Pi group pins are used for delivery of an image signal which is included in a content as an object of video-recording or reproduction, the Si group pins are used for delivery of an audio signal included in a similar content, the Cio group pins are used for delivery of a control signal related to setting and/or monitoring of operations of the terminal 10, and the PSi group pins are used for delivery of power supplied to the above-described power supply circuit 17. Note that the identifiers "Pi", "Si", "Cio", "PSi" of these groups are constituted of upper case letters corresponding to initials of "Picture", "Sound", "Control", "Power Supply" and lower case letters meaning "input", "output", "input/output" indicating a direction of the above delivery on the basis of the terminal 10, respectively.

Among the pins of the receptacle 10J, the C group pins are connected to an input of a connection detecting part 11, and an output of the connection detecting part 11 is connected to a first input port of a controlling part 12. To a second input port of the controlling part 12, an output of a manipulating part 13 is connected, and a first output port of the controlling part 12 is connected to a first input port of a signal processing part 14. Bus terminals of these controlling part 12 and signal processing part 14 are connected to corresponding ports of a memory part 15. Note that the memory part 15 is constituted for example as a hard disk apparatus or an IC memory which is accessed under predetermined area management. A first output port of the signal processing part 14 is connected to a first input port of a displaying part 16. To a second input port of the displaying part 16, a second output port of the controlling part 12 is connected, and a third output port of the controlling part 12 is connected to a controlling terminal of the power supply circuit 17.

Also, among the pins of the plug 10P, the Pi group pins are connected to an input of a video-input processing part 18, and the Si group pins are connected to an input of an audio-input processing part 19. Outputs of these video-input processing part 18 and audio-input processing part 19 are connected to a second and a third input port of the signal processing part 14, respectively. A second output port of the signal processing part 14 is connected to the P group pins of the receptacle 10J via a video-output processing part 20. A third output port of the signal processing part 14 is connected to the S group pins of the receptacle 10J via an audio-output processing part 21. The Cio group pins of the plug 10P are connected to the input/output ports of the controlling part 12 and the connection detecting part 11, and the PSi group pins of the plug 10P are connected to an input of the power supply circuit 17.

Next, an electrical structure and a connection relationship of respective parts of the HMD 30 will be explained.
As described above, other than the plug 31 P which realizes an electrical connection with the terminal 10, the HMD 30 is provided with a displaying device 32, headphones 33L, 33R, a manipulating part 34, and an HMD controlling part 35 which controls the HMD, and so on.
The displaying device 32 and the headphones 33L, 33R are connected to pins corresponding to the already described P group and S group, respectively, among pins of the plug 31P. The HMD controlling part 35 is, connected to specific input/output ports of the controlling part 12 of the terminal 10 via corresponding pins of the plug 31P and the receptacle 10J of the terminal 10. Besides controlling each function of the HMD 30, this HMD controlling part 35 outputs to the controlling part 12 whether the HMD 30 is capable of outputting audio or not and/or whether the HMD 30 is capable of displaying a video or not. An output of the manipulating part 34 is connected to a part of pins corresponding to the already described C group among the pins of the plug 31 P.

Remaining pins of the C group (hereinafter referred to as "sub-C group pins") are grounded in advance according to a combination corresponding to the structure (including type) and characteristics of the HMD 30, as shown in enlargement at an upper right portion of Fig. 1. Note that these sub-C group pins are used for delivery of binary information to the terminal 10 for example, together with a ground terminal GND which is the basis of the aforementioned grounding. By the binary information, the terminal 10 becomes capable of identifying by the connection detecting part 11 the structure of a device (hereinafter referred to as "connectable device") which is connected to the receptacle 10J of the terminal 10. For distinguishing from other devices, as the binary information, any one or two of the following respective binary information are outputted.
(a) First binary information indicating whether or not a connectable device is a device hmd (hereinafter referred to as "head mounted display") which is capable of outputting a reproduction signal of image but has no audio output.
(b) Second binary information indicating whether or not a connectable device is a device hmd·hp (hereinafter referred to as "head mounted display headphone") which is capable of outputting both a reproduction signal of image and a reproduction signal of audio.
(c) Third binary information indicating whether or not a connectable device is a device hp (hereinafter referred to as "headphone") which is capable of outputting only a reproduction signal of audio.
(d) Fourth binary information indicating whether or not a connectable device includes a manipulating part op corresponding to the already described manipulating part 34.

Incidentally, the HMD 30 includes both a headphone and a displaying part, and therefore is the head mounted display headphone (b).
Note that one connectable device (HMD 30 in Fig. 1) is connected directly to the terminal 10 of this embodiment, but such a connectable device (HMD 30 in Fig. 1) may be connected via for example a remote controller 50 shown by a frame of a chain double-dashed line in a substantially right central portion of Fig. 1. Also, a plurality of connectable devices may be connected in series to the terminal 10. Further, the plurality of connectable devices may be connected in parallel via one or more receptacles (included in the terminal 10 together with the receptacle 10J).

Note that the above-described remote controller 50 includes a manipulating part 52 corresponding to a manipulating part of a connectable device (HMD 30 in Fig. 1), a plug 51 P adapted to the receptacle 10J of the terminal 10, and a receptacle 51J which is suitable for connection to a connectable device such as the plug 31 P of the connectable device (HMD 30 in Fig. 1) and other connectable devices. The manipulating part 52, the plug 51 P, the receptacle 51J are connected via wirings which realize relaying among these three parts. Also, a signal of the manipulating part 52 is inputted to the controlling part 12 via the above-described C group pins. Also, the remote controller 50 as above may also be provided with a displaying device corresponding to the displaying part 16 of the terminal 10.

Next, an electrical structure of the cradle 40 and a connection relationship of respective parts thereof will be explained.
The receptacle 41J of the cradle 40 realizes an electrical connection with the terminal 10 via the plug 10P of the terminal 10. Among pins of the receptacle 41J, to pins corresponding to the already-described Pi group, Si group, Cio group and PSi group, there are connected a video-input terminal 42, an audio-input terminal 43, a control-input/output terminal 44 and a power-input terminal 45, respectively. The cradle 40 is connectable to information terminal equipment (such as computer) via these terminals. Also, the cradle 40 includes a controlling part 46, and the controlling part 46 outputs a predetermined signal or voltage to a pin corresponding to the Cio group when a plug is connected to the receptacle 41J of the cradle 40.

Next, basic operations of electrical components of this embodiment will be explained. Here, a case where the connectable device of the terminal 10 is the HMD 30 will be explained.
The power supply circuit 17 provided in the terminal 10 has a not-shown battery, and store power supplied from the cradle 40 in the battery. At this time, the power is supplied to the power supply circuit 17 via the power-input terminal 45 provided in the cradle 40, the receptacle 41J of the cradle 40, the plug 10P of the terminal 10 in order. Further, the power supply circuit 17 supplies power stored in the battery in this manner to the respective parts of the terminal 10 as driving power, and also supplies driving power to the HMD 30. Between them, the driving power to the HMD 30 is supplied via predetermined pins of the receptacle 10J of the terminal 10 and predetermined pins of the plug 31 P of the HMD 30.

To the video-input terminal 42 of the cradle 40, an image signal is inputted from information terminal equipment. This image signal is inputted to the video-input processing part 18 of the terminal 10 via the receptacle 41J of the cradle 40 and the plug 10P of the terminal 10. The video-input processing part 18 performs processing of A/D conversion and/or the like on the image signal to generate digital image information, and gives the digital image information to the signal processing part 14.

To the audio-input terminal 43 of the cradle 40, an audio signal is inputted from the information terminal equipment. This audio signal is inputted to the audio-input processing part 19 of the terminal 10 via the receptacle 41J of the cradle 40 and the plug 10P of the terminal 10. The audio-input processing part 19 performs processing of A/D conversion and/or the like on the audio signal to generate digital audio information, and gives the digital audio information to the signal processing part 14.

The controlling part 12 of the terminal 10 performs predetermined processing according to the following instructions and conditions of an apparatus connected to the terminal 10, and specifies signal processing to the signal processing part 14 as necessary.
(a) Instruction given by the user via the manipulating part 13 of the terminal 10.
(b) Instruction given from information terminal equipment (personal computer or the like) via the control-input/output terminal 44 of the cradle 40.
(c) Instruction delivered from the HMD 30 when the manipulating part 34 of the HMD 30 is manipulated by the user.

Note that the information (c) is delivered to the controlling part 12 via the plug 31 P, the receptacle 10J and the connection detecting part 11.
Based on an instruction and information regarding conditions of an apparatus connected to the terminal 10 obtained in this manner, the controlling part 12 controls the respective parts such as the signal processing part 14.
On the other hand, the signal processing part 14 is controlled by the controlling part 12, and when for example one or both of the above-described image information and audio information (hereinafter simply referred to as "digital contents data") are inputted via the cradle 40, the signal processing part 14 stores them as a data file in the memory part 15.

Here, as types of the digital contents data, there are for example video contents data with audio including audio information and image information (moving-image information), audio contents data including audio information only, image contents data including image information (static-image information) only, and so on, but here processing in a case that the digital contents data stored in the memory part 15 are video contents data with audio will be explained.

Incidentally, when reproducing digital contents data, the controlling part 12 detects one of the above-described instructions (a) to (c). Also, after detecting conditions of a connected apparatus, the controlling part 12 controls the signal processing part 14 as follows under a certain condition.
When the signal processing part 14 reads a desired digital contents data (here a video content with audio) stored already in the memory part 15, the signal processing part 14 delivers image information included in the digital contents data to the video-output processing part 20, and delivers audio information included in the digital contents data to the audio-output processing part 21. Note that a storage area to be a target of writing or reading to/from the memory part 15 is determined under an area management performed by the signal processing part 14 or the controlling part 12.

The video-output processing part 20 performs processing of D/A conversion and/or the like on the aforementioned image information to generate a reproduction signal (an analog signal of an image), and delivers such a reproduction signal to the HMD 30. Also, the audio-output processing part 21 performs processing of D/A conversion and/or the like on the aforementioned audio information to generate an audio reproduction signal (an analog signal of audio), and delivers such a reproduction signal to the HMD 30. Delivery of these analog signals of image and audio is performed via the receptacle 10J of the terminal 10 and the plug 31 P of the HMD 30.

The HMD 30 outputs the reproduction signal outputted from the terminal 10 via the displaying device 32 and/or the headphones 33L, 33R so that the user can perceive it. At this time, the reproduction signal of audio delivered from the terminal 10 is given to the headphones 33L, 33R, and the reproduction signal of image delivered from the terminal 10 is given to the displaying device 32.
Also, the HMD controlling part 35 of the HMD 30 controls a not-shown volume which controls outputs of the headphones 33L, 33R. This control of volume is performed according to manipulation contents of the manipulating part 34 of the HMD 30. Therefore, the user can change the volume of audio emitted from the headphones 33L, 33R by appropriately manipulating the manipulating part 34 of the HMD 30.

Also, the signal processing part 14 of the terminal 10 can output for example the following information as an image to one or both of the displaying part 16 of the terminal 10 and the displaying device 32 of the HMD 30.
(a) Content information of a digital contents data stored in the memory part 15.
(b) A message to be notified to the user.

Note that the message (b) is notified to the user according to "manipulation of this system" such as manipulation contents of the manipulating part 13 of the terminal 10, manipulation contents of the manipulating part 34 of the HMD 30, a request for moving the displaying device 32 of the HMD 30, and so on. These message data are also stored in the memory part 15.
Next, a mechanical structure of this embodiment will be explained. Also here, a case where the connectable device of the terminal 10 is the HMD 30 will be explained.

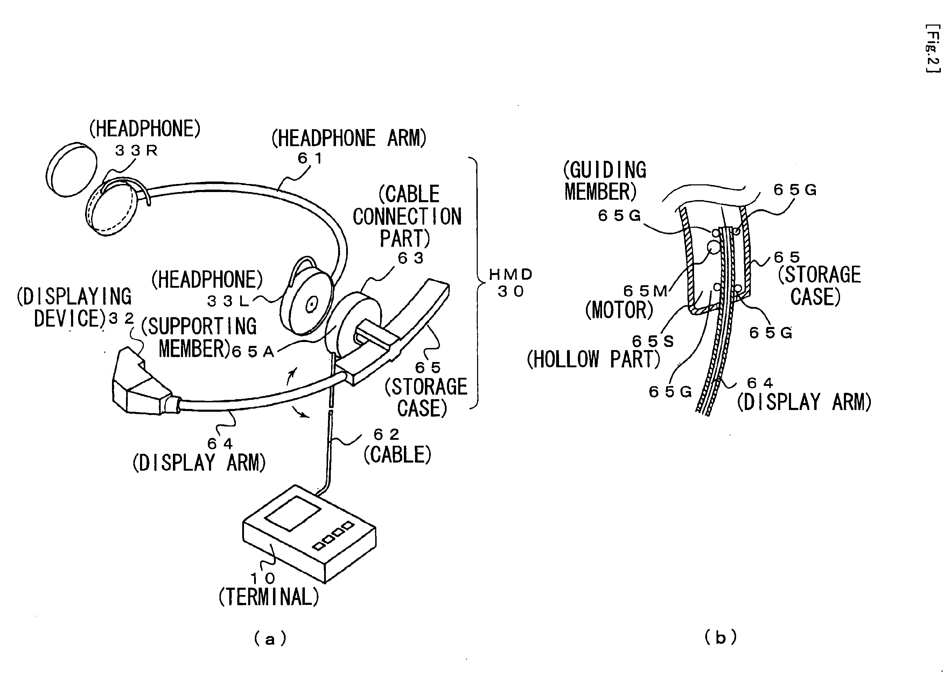

Fig. 2(a) is an entire structure view of the contents data reproduction system, and Fig. 2(b) is a partial cross-sectional view of a storage case 65 constituting the HMD 30.
As shown in Fig. 2(a), in the HMD 30, the headphones 33L, 33R are attached to both ends of a headphone arm 61. The headphone arm 61 is constituted of a member formed in a curved shape. The displaying device 32 is attached to one end of a display arm 64. The display arm 64 is formed with a predetermine curvature. The other end of the display arm 64 is held by the storage case 65. This storage case 65 has, as shown in Fig. 2(b), a hollow part 65S in which the display arm 64 can be stored and a guiding member 65G constituted of a plurality of bearings disposed in the hollow part 65S. Further, as shown in Fig. 2(a), on a side wall of the storage case 65, a supporting member 65A which is capable of engaging with the headphone 33L and also doubles as a cable connection part 63 is provided. Also, between the supporting member 65A and the storage case 65, an articulating mechanism is provided, which can pivotally move the display arm 64 in arrow directions. Note that this cable connection part 63 is connected to the terminal 10 via the already-described plug 31 P (not shown in Fig. 2), a cable 62, the receptacle 10J (not shown in Fig. 2). Accordingly, the displaying device 32 of the HMD 30 is connected to the terminal 10 (output of the video-output processing part 20 of the terminal 10). This connection is made by coupling, inside the cable connection part 63, a wiring reaching the inside of the cable connection part 63 via the inside of the display arm 64 and the hollow part 65S of the storage case 65 with a core wire assigned to the already described P group pins among core wires of the cable 62.

Also, the HMD controlling part 35 (not shown in Fig. 2) of the HMD 30 is, for example, disposed inside the cable connection part 63. Further, the HMD controlling part 35 is connected via the aforementioned wiring to a motor 65M which gives necessary motive energy for moving the display arm 64 along the guiding member 65G and to a sensor (not shown) which detects the position of the display arm 64. Also, the articulating mechanism part provided between the supporting member 65A and the storage case 65 also has a not-shown sensor, which is connected to the HMD controlling part 35.

Then, the HMD controlling part 35 detects with the sensors whether or not the display arm 64 is in a condition of being stored in the storage case 65 (invisible condition), whether or not the displaying device 32 of the HMD 30 is in a condition of being in front of a user's eye (visible condition), or the like, and controls the motor 65M or outputs to the audio-output processing part a message of audio or the like so as to let the user move the displaying device 32 of the HMD 30 to the front of an eye, according to results from the sensors and an instruction from the controlling part 12.

Timing of such reeling out and storing of the display arm 64 by the HMD controlling part 35 is determined by manipulation contents of the manipulating part 34 of the HMD 30. Therefore, the user can perform reeling out and storing of the display arm 64 by desired timing by manipulating the manipulating part 34 appropriately.
Next, characteristic operations of this embodiment will be explained based on Fig. 1.

Characteristics of this embodiment reside in the following processing performed by the controlling part 12 and the signal processing part 14 in the terminal 10. This processing is performed in cooperation with the connection detecting part 11.
Hereinafter, operations of the first embodiment of the present invention will be explained with reference to Fig. 1. Characteristics of this embodiment reside in the following processing performed by the controlling part 12 and the signal processing part 14 in the terminal 10. This processing is performed in cooperation with the connection detecting part 11.

In the terminal 10, the connection detecting part 11 and the controlling part 12 identify which one of the following the structure of the connectable device corresponds to.
(a) Head mounted display including no manipulating part.
(b) Head mounted display headphone including no manipulating part.
(c) Headphone including no manipulating part.
(d) No connectable device connected.
   (a') Head mounted display including a manipulating part.
   (b') Head mounted display headphone including a manipulating part.
   (c') Headphone including a manipulating part.

Incidentally, when the connectable device is the HMD 30, it is identified to be corresponding to the head mounted display headphone (b') including a manipulating part.
This identification is performed based on the condition of a pin (or a combination of pins) belonging to the above-described sub-C group pins of the connectable device. Note that the respective types of connectable devices all have a plug that matches with the receptacle 10J and are connected based on a common pin arrangement. Also, in the respective types of connectable devices, grounding of pins are made by a wiring pattern or the like provided in the connectable devices.

Also, whether the connectable device includes a manipulating part or not is determined based on the already-described fourth binary information. Further, the type of the connectable device is identified based on logic values of the already-described first to third binary information (the binary information are delivered from the connectable device to the controlling part 12 via the receptacle 10J and the connection detecting part 11).
Assuming the case where a manipulating part is included in the connectable device ((a'), (b'), (c')), the controlling part 12 performs control of the respective parts of the terminal 10 and the connectable device based on respective manipulation contents of the manipulating part of the connectable device and the manipulating part 13 of the terminal 10. However, when the connectable device is connected to the terminal 10 via the remote controller, the controlling part 12 performs control of the respective parts of the terminal 10 and the connectable device based on respective manipulation contents of the manipulating part of the connectable device, the manipulating part 13 of the terminal 10, and the manipulating part of the remote controller.

However, inversely, when no manipulating part is included in the connectable device ((a), (b), (c)), the controlling part 12 performs control of the respective parts of the terminal 10 and the connectable device based on manipulation contents of only the manipulating part 13 provided in the terminal 10. However, when the connectable device is connected to the terminal 10 via the remote controller, the controlling part performs control of the respective parts of the terminal 10 and the connectable device based on respective manipulation contents of the manipulating part 13 of the terminal 10 and the manipulating part of the remote controller.

In other words, the user can give an instruction to the terminal 10 by manipulating any one of the manipulating part of the connectable device, the manipulating part of the remote controller, and the manipulating part 13 of the terminal 10.
Also, the controlling part 12 identifies the structure (type) of a connectable device based on logical values of the already-described first to third binary information delivered from the connectable device via the connection detecting part 11. Further, in the following, the HMD controlling part 35 detects how long the display arm 64 supporting the displaying device 32 of the HMD 30 is stored in a storage case which will be described later. Then, the controlling part 12 has a function to determine whether or not it is in a condition that projection of image information on the retina of a user's eye is possible based on an output from the HMD controlling part 35.

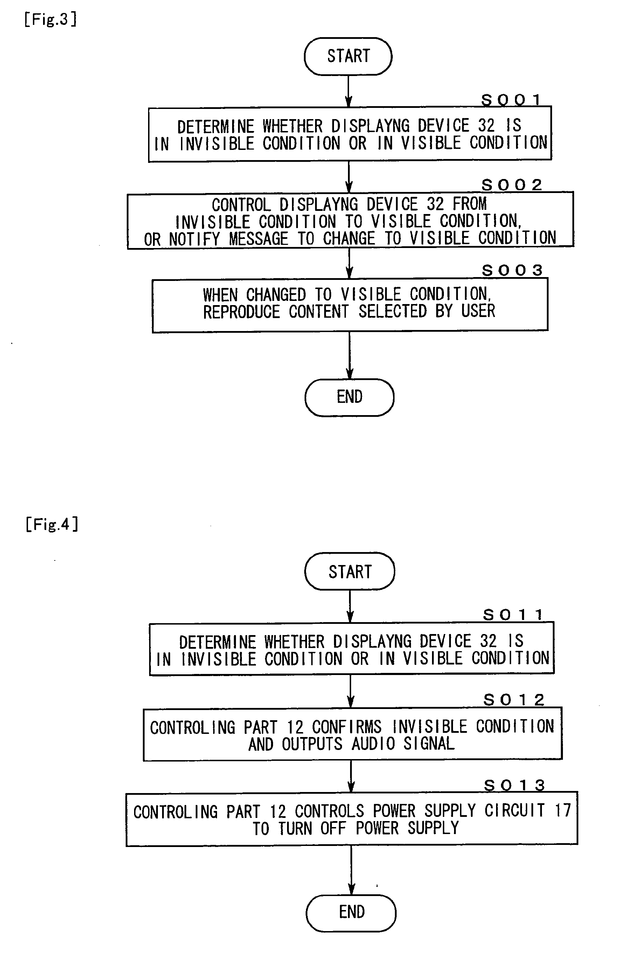

In the system constituted of the HMD 30 and the terminal 10 which are described above, the controlling part 12 performs control as follows when the user selects contents data stored in the memory part 15.
The controlling part 12 performs control as follows according to the type to which the contents data correspond. Fig. 3 is a flowchart showing the control at this time.

[1] When selected contents data are contents data constituted of video
   As first step (S001), the controlling part 12 asks the HMD controlling part 35 whether the displaying device 32 of the HMD 30 is in an invisible condition or not. The HMD controlling part 35 comprehends which position the display arm 64 is located at from the sensor which detects the position of the display arm 64. Then, the HMD controlling part 35 transmits information regarding the position of the display arm 64 to the controlling part 12. Based on this, the controlling part 12 determines, whether the displaying device 32 of the HMD 30 is in an invisible condition or in a visible condition.

Next, as second step (S002), when the displaying device 32 of the HMD 30 is in an invisible condition in the first step (S001), the controlling part 12 instructs the HMD controlling part 35 to change the displaying device 32 from the invisible condition to a visible condition, and the HMD controlling part 35 changes the displaying device 32 to the visible condition by controlling the motor 65M. Alternatively, the controlling part 12 gives the user a message via the displaying part 16 or the headphones 33R, 33L to manipulate the HMD 30 so that the displaying device 32 changes to a visible condition. This message is stored in the memory part 15 in advance and realized by reproducing a data file of this message automatically by the controlling part 12.

Then, upon notification of changing to the visible condition from the HMD controlling part 35, as third step (S003) the controlling part 12 controls the memory part 15 and the signal processing part 14 together to start reproduction of contents data selected by the user. A reproduction signal outputted from the signal processing part 14 is outputted to the displaying device 32 of the HMD 30 via the video-output processing part 20.
By giving a message in this manner, the user can view the displaying device 32 of the HMD 30 with recognition in advance that video contents data are to be reproduced. Therefore, it is possible to avoid a problem that the user forgets to change the displaying device 32 of the HMD 30 to a visible condition or that the user is surprised by sudden start of reproduction of video contents data on the displaying device 32 of the HMD 30 when the user accidentally instructs reproduction of data including video contents data by a wrong manipulation.

Also, other than the above-described control of the HMD 30, the controlling part 12 performs control as follows at the same time.
When instructing reproduction of data having only a video content but including no audio contents data, the controlling part 12 creates a condition that it is not possible to perform input regarding volume or audio quality adjustment with the manipulating part 13 of the terminal 10. Alternatively, the controlling part 12 controls so as not to accept an instruction regarding volume or audio quality adjustment that is accepted via the manipulating part 13 of the terminal 10 or the manipulating part 52 of the remote controller 50. Thus, if the user performs input regarding volume or audio quality adjustment carelessly, it is possible to prevent a situation such that sound of a large volume is produced suddenly, sound cannot be heard unintentionally, or audio quality becomes strange unexpectedly when the audio contents data is reproduced next time.

Further, the controlling part 12 controls the power supply circuit 17 to turn off power supply to a drive circuit of the displaying part 16 of the terminal 10. Accordingly, it becomes possible to reduce power consumption. Also, the controlling part 12 stops the function of the audio-output processing part 21 by turning off the power supply thereto, or the like.
[2] When selected contents data are contents data constituted of audio
   The controlling part 12 implements control based on a flowchart shown in Fig. 4.

In first step, based on a signal from the HMD controlling part 35, the controlling part 12 determines, whether the displaying device 32 of the HMD 30 is in an invisible condition or in a visible condition (S011).
In second step, when the displaying device 32 of the HMD 30 is in a visible condition in the first step (S011), the controlling part 12 instructs the HMD controlling part 35 to change the displaying device 32 from the visible condition to an invisible condition. Alternatively, the controlling part 12 gives the user a message via the displaying part 16 or the headphones 33R, 33L to manipulate the HMD 30 so that the displaying device 32 changes to an invisible condition.

Then, upon notification of changing to the invisible condition from the HMD controlling part 35, the controlling part 12 controls the memory part 15 and the signal processing part 14 together to output an audio signal to the headphones 33L, 33R via the audio-output processing part 12 (S012).
In third step, the controlling part 12 controls the power supply circuit 17 to turn off power supply to the video-output processing part 20 and a drive circuit of the displaying device 32 of the HMD 30. In this manner, it becomes possible to reduce power consumption (S013). Note that this third step may be performed simultaneously with the second step.

Further, the controlling part 12 creates a condition that it is not possible to perform input regarding image quality or brightness with the manipulating part 13. Alternatively, the controlling part 12 controls so as not to accept an instruction regarding image quality or brightness that is accepted via the manipulating part 13 of the terminal 10 or the manipulating part 52 of the remote controller 50. Thus, it is possible to prevent a situation such that the screen becomes dark improperly or image quality such as contrast is changed unintentionally.

Note that the HMD controlling part 35 of the HMD 30 constantly monitors whether the display arm 64 is reeled out or not, and when it is reeled out by any kind of cause, the controlling part 12 performs control such that a warning voice is given to the user by audio or power supply to the video-output processing part 20 is started and a warning message is displayed on the displaying device 32 of the HMD 30.
[3] Case of contents data including both audio and video
   The controlling part 12 implements the above-described [1]. At this time, the controlling part 12 creates a condition that it is possible to input an instruction regarding volume or audio quality, brightness or image quality, and makes it possible to make adjustment regarding audio and adjustment regarding video such as volume, audio quality, image quality, brightness, and the like. Further, the controlling part 12 turns off display on the displaying part 16 of the terminal 10.

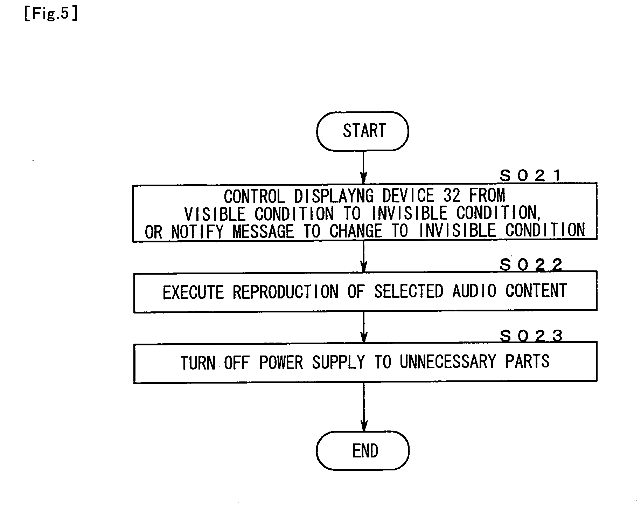

[4] When the user reselects contents data of audio only from a condition that contents data of both video and audio are reproduced
   The controlling part 12 implements control based on a flowchart shown in Fig. 5.
   When contents data of both video and audio are reproduced, a large part of the display arm 64 of the HMD 30 projects from the storage case 65 (it is in a visible condition). When contents data of audio only are selected in this state, the controlling part 12 instructs the HMD controlling part 35 to change the displaying device 32 of the HMD 30 from the visible condition to an invisible condition. Alternatively, the controlling part 12 reproduces message data to give the user a message via the displaying part 16 or the headphones 33R, 33L to manipulate the HMD 30 so that the displaying device 32 changes to an invisible condition. By thus giving a message, the user recognizes in advance that the reproduction of video contents data is to be stopped, and recognizes in advance that the displaying device 32 of the HMD 30 is to be changed to an invisible condition. Therefore, it is possible to prevent a problem such that the user forgets to change the displaying device 32 of the HMD 30 to an invisible condition or that display on the displaying device 32 of the HMD 30 is stopped suddenly and the user misunderstands it as a malfunction (S021).
   In the second step, the controlling part 12 executes, together with display of this warning message, reproduction of selected audio contents data, and supplies an audio message to the headphones 33L, 33R (S022).

When a certain time passes thereafter, the controlling part 12 performs, as third step, reduction of power consumption by turning off power supply to the video-output processing part 20 or the like (S023), similarly to the above-described [2].
Note that the HMD controlling part 35 may drive automatically the motor 65M of the HMD 30 to change the displaying device 32 to an invisible condition when a certain time passes after display of the warning message.

Each procedure explained in [4] may also be performed similarly in the case where the user reselects contents data with audio only from a condition that contents data of video only is reproduced.
[5] When the user reselect contents data including video from a condition that audio contents data are reproduced
   The controlling part 12 performs processing similar to [1]. Particularly, if the displaying device 32 of the HMD 30 is in an invisible condition when the user reselects contents data including video from a condition that audio contents data are reproduced, the controlling part 12 may instruct the HMD controlling part 35 to change the displaying device 32 from the invisible condition to a visible condition and give a message to inform the user about that the displaying device 32 turns from the invisible condition to a visible condition (in the case of automatic operation). Alternatively, the controlling part 12 gives the user a message via the displaying part 16 or the headphones 33R, 33L to manipulate the HMD 30 so that the displaying device 32 changes to a visible condition (in the case of manual operation). In either case, by giving a message in this manner, the user can view the displaying device 32 of the HMD 30 with recognition in advance that video contents data are to be reproduced. Therefore, it is possible to avoid a problem that the user forgets to change the displaying device 32 of the HMD 30 to a visible condition or that the user is surprised by sudden start of reproduction of video contents data on the displaying device 32 of the HMD 30.

Note that in the case of the above-described [1] to [5], power consumption is reduced by controlling to turn off power supply to the video-input processing part 18 and the audio-input processing part 19.
Note that regarding determination of the type of contents data, in this embodiment, the type is identified by the extension of each file storing a content.
Incidentally, when contents data are switched or when non-reproduced image information is still included in desired contents data for which reproduction itself is interrupted and the reproduction is stopped, it is preferable that, prior to restart of the reproduction of the contents data, processing of rewinding the image information by a specified time or to the beginning of a scene including the point of interruption (which is identified based on a correlation with the preceding frame) is performed. Note that the rewinding may be set longer as a time passed from the interruption of reproduction to the restart of reproduction is longer, or may be set to a different value according to the passed time. On the other hand, when the desired contents data for which reproduction is interrupted are constituted only of audio information, rewinding of this audio information is omitted prior to restart of the reproduction of the contents data.

When image information is interrupted, it is often the case that the user does not necessarily have a strong impression at a time point of interruption but remembers a video which left a strong impression at a time point which is traced back to some extent from the interrupted time point. Hence, it is often the case that the user forgets a video up to the interrupted time point from the video which left a strong impression, even when the reproduction is restarted just at the interrupted time point. Thus, by starting the reproduction by tracing back to some extent, the user can understand a video after the interruption smoothly while recalling a forgotten video from the memory. Note that the longer the time passes from the interruption point, the higher the possibility to forget. Thus, by monitoring the time and determining a reproduction start time by tracing back according to the passed time, the user can understand the video after the interruption more smoothly.

On the other hand, regarding audio, music in particular, there is a low percentage for the user to take its meaning as important as for a video. Therefore, it is often the case that there is not so much meaning for setting the reproduction start time with a labor of tracing back, and hence the reproduction may be restarted at the time of interruption.

### [Second Embodiment]

Next, a second embodiment will be explained. In the second embodiment, only differences from the first embodiment will be explained. The system of the second embodiment has an electrical structure and a connection relationship of respective parts which are the same as in the first embodiment. The same reference numerals as those in the first embodiment are used below for explanation.

Characteristics of this embodiment reside in the following processing performed by the controlling part 12 and the signal processing part 14 in the terminal 10 when the terminal 10 is connected to the cradle 40.
In this embodiment, the controlling part 12 detects at a predetermined frequency via the connection detecting part 11 whether it is connected to the cradle 40 or not. The receptacle 41J is provided with a not-shown mechanical switch. Accordingly, when the receptacle 41J of the cradle is connected to the plug 10P, the controlling part 46 of the cradle 40 detects turning on of the mechanical switch, and outputs a predetermined signal or voltage indicating that it is a cradle to a pin corresponding to the Cio group. The connection detecting part 11 detects this signal or voltage and transmits a predetermined signal according to the type of an apparatus to the controlling part 12. The controlling part 12 can recognize that the cradle 40 is connected by the signal transmitted from the connection detecting part 11.

When the controlling part 12 identifies that the terminal 10 is connected to the cradle 40, the controlling part 12 recognizes that the user performed a manipulation for recording an input signal for the cradle 40 in the memory part 15 of the terminal 10. Then, the controlling part 12 controls the terminal 10 so as to change to a recording mode such as audio-recording mode and video-recording mode or audio/video-recording mode.
Specifically, upon detection of connection of the terminal 10 to the cradle 40, the controlling part 12 controls the signal processing part 14 to be in a condition of being capable of recording in the recording part 15 and simultaneously turns off driving of or power supply to the video-output processing part 20 and the audio-output processing part 21. On the other hand, the controlling part 12 turns on the video-input processing part 18 and the audio-input processing part 19 to create a condition that a video signal and an audio signal inputted from the cradle can be inputted.

Note that at this time the controlling part 12 controls the power supply circuit 17 to execute stopping of power supply to the HMD 30 simultaneously as stopping of power supply to other output processing parts to thereby reduce power consumption.
Then, the controlling part 12 starts recording in the memory part 15 in an appropriate file format with appropriate contents data of which a video signal and an audio signal are inputted.
Incidentally, the controlling part 12 controls so as to change to the recording mode (audio-recording mode, video-recording mode, audio/video-recording mode) by connection of the terminal 10 to the cradle 40, but it is not limited thus. The same control is performed when a manipulation of changing to the recording mode is received from the manipulating part 13 of the terminal 10 or the manipulating part 52 of the remote controller 50.

When a manipulation of changing to the recording mode is received from each manipulating part, it is preferable that the change to the recording mode is made after checking a condition of using the connectable device and determining whether it is acceptable or not.
For example, when the terminal 10 is in an audio contents data reproduction condition and the headphones are in a connected condition, the controlling part 12 allows execution of the video-recording mode in which a video signal can be recorded. Also, when the terminal 10 is in a video contents data reproduction condition and the head mounted display is in a connected condition, the controlling part 12 allows execution of only the audio-recording mode in which an audio signal can be recorded. However, when the head mounted display is connected but the head mounted display is in an invisible condition (invisible condition), the controlling part 12 may control to stop the video contents data reproduction condition by the terminal 10 immediately and allow execution of the video-recording mode. In this case, it may be "audio/video-recording mode".

Incidentally, the mode of being controlled automatically to be the recording mode is applicable to modes other than the above mode. For example, in a condition of not being in the contents data reproduction condition, changing to the recording mode may be allowed similarly. Further, the changing may be allowed even in a condition that none of connectable devices such as a head mounted display, headphones, and a head mounted display headphone is connected.

Note that in the case of being in the recording mode as described above, when in a condition that a video signal is recorded for example, the operation of the video-output processing part 20 is stopped or power supply thereto is stopped. Also, when in a condition that an audio signal is recorded, it is preferable that the operation of the audio-output processing part 21 is stopped or power supply thereto is stopped. Further, when in a condition that a video signal is recorded, it is preferable that the controlling part 12 performs control via the HMD controlling part 35 so that the display arm 64 of the HMD 30 changes automatically to an invisible condition.

With the operation as described above, unnecessary power consumption is reduced, and damage due to unnecessary extension of the display arm 64 can be avoided.
Note that the format of a file to be stored as data in the memory part 15 in the "audio-recording mode" and the "video/audio-recording mode" is desired to be the MP3 format and the MPEG2-AAC. (Advanced Audio Coding) format for example, which are indicated by a specific extension, but may be separately set or selected based on the already-described man-machine interface.

Also, in the above-described embodiments, detection of a connection of the connectable device and the cradle 40 and the terminal 10 as well as detection of a structure or a condition of the connectable device is performed based on logic values of the already described first to fourth binary information. However, such detection may be realized based on any one of the following items. Also, it may be realized under any distribution of functions between the connectable device and the cradle 40 and the terminal 10.
(1) Potential and/or impedance of a wiring connected to the connectable device via any one of the pins of the receptacle 10J of the terminal 10
(2) Information delivered from the connectable device via the wiring explained in (1)
(3) Procedure of cooperation with the connectable device performed via the wiring explained in (1)
(4) Presence or level of an Image signal and/or an audio signal inputted to the video-input processing part 18 and/or the audio-input processing part 19 from the cradle 40
(5) Potential and/or impedance of a wiring connected to the cradle 40 via any one of the pins of the plug 10P of the terminal 10
(6) Information delivered from the cradle 40 via the wiring explained in (5)
(7) Procedure of cooperation with the cradle 40 performed via the wiring explained in (5)

Further, in the above-described embodiments, one connectable device is connected directly to the terminal 10. However, such a connectable device may be connected via for example the remote controller 50 shown by a frame of a chain double-dashed line in a substantially right central portion of Fig. 1. Also, it may be a plurality of connectable devices connected in series to the terminal 10. Further, the plurality of connectable devices may be connected in parallel via one or more receptacles provided together with the receptacle 10J in the terminal 10. For example, identification is performed with priority in order of the head mounted display headphone > head mounted display > headphone, and there is no restriction in usage to make the head mounted display and the headphone become exclusive with respect to each other.

Note that the above-described remote controller 50 includes a manipulating part 52 corresponding to the manipulating part 34 of the already-described HMD 30, a plug 51P adapted to the terminal 10 (receptacle 10J), and a receptacle 51J which is suitable for connection to a connectable device such as the HMD 30 (plug 31 P), and is constituted by a connection via wirings which realize relaying via these manipulating part 52, plug 51 P, receptacle 51J. Also, the remote controller 50 as above may also be provided with a displaying device corresponding to the displaying device 32 of the already described HMD 30. Further, any of the above-described embodiments may be combined arbitrarily or applied independently.

Also, in the above-described embodiments, the controlling part 12 detects an effective device based on an instruction given by the user, with consideration of the structure (type) of the connectable device identified based on logic values of the already described first to third binary information delivered from the connectable device. However, the controlling part 12 may directly identify such an effective device as a combination of the already described first to third binary information (which may include a predetermined number of binary information delivered to the terminal 10 together with these binary information) which are delivered to the connection detecting part 11 by the manipulating part 34 under a manipulation performed via the manipulating part 34 in the HMD 30.

Also, in the above-described embodiments, it is assumed that the HMD 30 has a structure separable from the terminal 10, but the present invention is not limited to this example. As another example, it may be a structure in which the respective circuits of the terminal 1 0 are housed in the cable connection part 63 of the HMD 30 shown in Fig. 2 and the HMD 30 and the terminal 10 are of an integrated type. In this case, it becomes a structure in which the receptacle 10J and the plug 31 P are omitted. However, the plug 10P is made to be provided on an exterior part of the HMD 30. Also, the manipulating part 13 provided in the terminal 10 may be provided on an exterior member of the headphone arm 61 or the headphones 33L, 33R or on an exterior member of the storage case 65 or the displaying device 32.

Also, when the terminal 10 is of an integrated type with the HMD 30, an instruction to the terminal 10 may be in conjunction with a manipulation of the HMD 10. For example, when a reproduction apparatus which reproduces contents data is connected to the plug 10P, the type of the connected reproduction apparatus is detected by a signal or voltage inputted from a pin of the Cio group of the plug 10P as described above. Then, when the reproduction apparatus is one capable of outputting video, the controlling part 12 determines whether the displaying device 32 is in a visible condition or not based on a signal from the HMD controlling part 35. When the displaying device 32 is in a visible condition, the controlling part 12 may be capable of instructing start of a reproducing operation to the connected reproduction apparatus.

Then, after entering the video reproducing operation once, if the user manipulates the HMD 10 to change the displaying device 32 from the visible condition to an invisible condition, the controlling part 12 may be capable of detecting the change from the invisible condition to a visible condition of the displaying device 13 in the HMD 10 and instructing the connected reproduction apparatus to stop the reproducing operation.
Of course, at the time when the reproduction apparatus capable of outputting video is connected to the plug 10P, the controlling part 12 may transmit an instruction signal to the HMD controlling part 35 to change the displaying device 32 to a visible condition, or may output a message to the user via the audio-output processing part 21 to change the displaying device 32 to a visible condition.

As another modification example, the terminal 10 may be capable of reproducing not only contents data stored in the memory part 15 inside but also data received via radio. In this case, there is provided a radio communication part connected to each of the signal processing part 14, the controlling part 12, and the connection detecting part 11, and when the connection detecting part 11 detects that a connection by radio is secured, data received by the radio communication part are supplied to the signal processing part 14, thereby allowing reproduction of data obtained via radio. Note that in this case, it may be allowed to switch between reproduction of contents data obtained from the radio communication part and reproduction of contents data stored in the memory part 15 based on whether the displaying device 32 is in a visible condition or not. For example, contents data including video information stored in the memory part 15 may be reproduced when the displaying device 32 is in a visible condition, or audio information obtained by radio data may be obtained when it is in an invisible condition. Note that for securing stability by radio communication, it is preferable that an antenna line is included in the headphone arm 61.

Further, in the above-described embodiments, the controlling part of the reproduction apparatus may perform control of allowing power supply to a corresponding circuit provided in the connectable device (effective device).
Also, while in the recording mode, the signal processing part 14 may detect a signal inputted to the cradle 40 and record it in an appropriate file format according to appropriateness of the signal.

Also, as an example of an embodiment of the present invention, the above-described functions performed by the controlling part 12 may be performed by a personal computer connected to the control-input/output terminal of the cradle 40. At this time, software by which a program executed by the above-described controlling part 12 can be manipulated in a personal computer to be used may be installed in the personal computer. Note that when connecting to the personal computer, the connection may be performed with a serial bus such as USB (registered trademark) or Fire wire (registered trademark). In this case, exchange can be performed from the same terminal for music data, video data or the like, and of course the control of the terminal 10 can be exchanged from the same terminal.

Also, the present invention is not limited to the above-described embodiments, various embodiments are possible in the scope of the present invention, and any kind of modification may be made to all or part of the component devices.

## Claims

1. A contents data reproduction system comprising a reproduction apparatus which reproduces contents data including at least one of audio and image and a device which is connected to said reproduction apparatus and outputs the contents data reproduced by said reproduction apparatus to a user, wherein said reproduction apparatus has:
an accepting unit which accepts an instruction to said reproduction apparatus by the user, and
a processing unit which performs determination whether or not said device connected to said reproduction apparatus is capable of corresponding to an operation of said contents data reproduction system, the operation being executed according to the instruction from said user accepted by said accepting unit.

2. The contents data reproduction system according to claim 1, wherein said processing unit controls at least one of said reproduction apparatus and said device connected to said reproduction apparatus according to said determination.

3. The contents data reproduction system according to claim 2, wherein:
said reproduction apparatus further comprises
a storing unit which stores said contents data including at least one of audio and image, and
an outputting unit which outputs said contents data to said device;
said accepting unit accepts an instruction from said user to select said contents data outputted by said outputting unit among said contents data stored in said storing unit; and
said processing unit controls at least one of said reproduction apparatus and said device connected to said reproduction apparatus according to a type of said contents data selected by said user.

4. The contents data reproduction system according to claim 3, wherein:
said device comprises a displaying part which displays an image, a wearable part which allows said displaying part to be worn on a head of said user, and a movable part which can correspond to a first mode in which said displaying part is positioned in front of an eye of said user and a second mode in which said displaying part is retracted from the front of the eye of said user; and
said processing unit selects said first mode or said second mode according to the type of said contents data selected by said user and drives said movable part.

5. The contents data reproduction system according to claim 3, wherein:
said device comprises a displaying part which displays an image, a wearable part which allows said displaying part to be worn on a head of said user, and a movable part which can correspond to a first mode in which said displaying part is positioned in front of an eye of said user and a second mode in which said displaying part is retracted from the front of the eye of said user; and
said reproduction apparatus comprises an informing part which selects said first mode or said second mode according to the type of said contents data selected by said user and prompts said user to drive said movable part to the selected mode.

6. The contents data reproduction system according to claim 4 or claim 5, wherein said processing unit controls power supply to said displaying part of said device connected to said reproduction apparatus according to the type of said contents data selected by said user.

7. The contents data reproduction system according to any one of claim 3 to claim 5, wherein said processing unit controls power supply to said outputting unit of said reproduction apparatus according to the type of said contents data selected by said user.

8. The contents data reproduction system according to claim 2, wherein:
said device comprises a displaying part which displays an image, and a wearable part which allows said displaying part to be worn on a head of said user; and
said processing unit controls driving or stopping of display of said image by said displaying part according to at least one of an instruction from said user accepted by said accepting unit and a type of a device connected to said reproduction apparatus other than said wearable part.

9. The contents data reproduction system according to claim 8, wherein:
said reproduction apparatus further comprises a storing unit which stores said contents data including at least one of audio and image; and
said processing unit stops display of said image by said displaying part when an instruction from said user to record said contents data including an image in said storing unit is accepted by said accepting unit.

10. The contents data reproduction system according to claim 2, wherein:
said reproduction apparatus further comprises an outputting unit which outputs a reproduction signal of said contents data to said device; and
said processing unit controls driving or stopping of an operation by said outputting unit according to at least one of an instruction from said user accepted by said accepting unit and a type of said device connected to said reproduction apparatus.

11. The contents data reproduction system according to claim 10, wherein:
said reproduction apparatus further comprises a storing unit which stores said contents data including at least one of audio and image; and
said processing unit stops an operation of said outputting unit when an instruction from said user to record said contents data including an image in said storing unit is accepted by said accepting unit.

12. The contents data reproduction system according to claim 2, wherein:
said reproduction apparatus further comprises a storing unit which stores said contents data including at least one of audio and image;
said device comprises a displaying part which displays an image, and a wearable part which allows said displaying part to be worn on a head of said user; and
said processing unit determines a condition of whether said displaying part is in use or not, and when said displaying part is not in use, said processing unit controls said reproduction apparatus to change to a mode of recording said contents data including an image in said storing unit.

13. The contents data reproduction system according to claim 2, wherein:
said reproduction apparatus further comprises a storing unit which stores said contents data including at least one of audio and image;
said device comprises an audio outputting part which outputs audio, and a wearable part which allows said audio outputting part to be worn on a head of said user; and
said processing unit determines a condition of whether said audio outputting part is in use or not, and when said audio outputting part is not in use, said processing unit controls said reproduction apparatus to change to a mode of recording said contents data including audio in said storing unit.

14. The contents data reproduction system according to claim 3, wherein:
said reproduction apparatus further comprises a storing unit which stores informing contents data including at least one of audio and image for informing said user; and
said outputting unit reproduces said informing contents data and outputs said informing contents data to said device connected to said reproduction apparatus when an instruction from said user to select said contents data of a different type is accepted by said accepting unit.

15. The contents data reproduction system according to any one of claim 1 to claim 14, wherein:
said reproduction apparatus further comprises
a storing unit which stores said contents data including at least one of audio and image, and
an outputting unit which outputs said contents data to said device; and
while outputting one of moving-image contents data and audio contents data as said contents data, when an instruction from said user to stop reproduction of said contents data is accepted by said accepting unit, said outputting unit stores a stop position at a time of accepting the instruction from said user, and when an instruction from said user to reproduce again the same said contents data is accepted by said accepting unit, said outputting unit starts reproduction of said contents data by tracing back from said stop position for a predetermined time.

16. The contents data reproduction system according to claim 15, wherein while outputting moving-image contents data as said contents data, when an instruction from said user to stop reproduction of said moving-image contents data is accepted by said accepting unit, said processing unit stores a stop position at a time of accepting the instruction from said user, and when an instruction from said user to reproduce again the same said moving-image contents data is accepted by said accepting unit, said processing unit starts reproduction of said moving-image contents data by tracing back from said stop position for a predetermined time according to an elapsed time from a time of accepting the instruction from said user to stop said moving-image contents data to a time of accepting the instruction from said user to reproduce again the same said moving-image contents data.

17. The contents data reproduction system according to claim 2, further comprising an external apparatus which sends contents data to said reproduction apparatus and is capable of communicating with said reproduction apparatus, wherein:
said reproduction apparatus comprises a detecting unit which detects a type of said external apparatus;
said accepting unit is capable of inputting an instruction to said external apparatus; and
said processing unit further controls said external apparatus together with said device according to said instruction accepted by said accepting unit.

18. A program which causes a general-purpose computer to perform controls of the contents data reproduction system according to any one of claim 1 to claim 17.
